Europäisches Patentamt

European Patent Office

Office européen des brevets

(19)

(11) EP 0 872 829 B1

(12) EUROPÄISCHE PATENTSCHRIFT

(45) Veröffentlichungstag und Bekanntmachung des Hinweises auf die Patenterteilung:
18.08.2004  Patentblatt 2004/34

(51) Int Cl.⁷: **G11B 5/84**

(21) Anmeldenummer: 98105363.0

(22) Anmeldetag: 25.03.1998

(54) **Vorrichtung zur Bearbeitung von Magnetbändern**

Device for the treatment of magnetic recording tapes

Dispositif d'usinage de bandes magnétiques

(84) Benannte Vertragsstaaten:
**DE FR GB IT LU NL**

(30) Priorität: **15.04.1997  DE 29706768 U**

(43) Veröffentlichungstag der Anmeldung:
**21.10.1998  Patentblatt 1998/43**

(73) Patentinhaber: **EMTEC Magnetics GmbH**
**77731 Willstätt (DE)**

(72) Erfinder:
• **Schlatter, Manfred, Dr.**
**79111 Freiburg (DE)**
• **Schultheiss, Manfred, Dipl.-Ing. (FH)**
**77694 Kehl (DE)**

(74) Vertreter: **Schweiger, Georg, Dr.**
**Reitstötter, Kinzebach & Partner**
**Postfach 86 06 49**
**81633 München (DE)**

(56) Entgegenhaltungen:
**US-A- 4 994 305**

• **PATENT ABSTRACTS OF JAPAN vol. 016, no. 504 (P-1439), 19. Oktober 1992 & JP 04 182929 A (MATSUSHITA ELECTRIC IND CO LTD), 30. Juni 1992**
• **PATENT ABSTRACTS OF JAPAN vol. 096, no. 003, 29. März 1996 & JP 07 307023 A (KAO CORP), 21. November 1995**

**Beschreibung**

Vorrichtung zur Bearbeitung von auf Endbreite geschnittenen Magnetbändern mittels einer Gesamtanzahl hintereinander angeordneter Bearbeitungseinheiten und wenigstens einer Bandtransporteinrichtung.

Mit der JP-Pat-OS 5-282665 ist eine Oberflächenbearbeitungseinrichtung für Magnetmedien bekannt, bei der die Aluminiumoberfläche eines Drehkörpers mit der Magnetschicht in Kontakt gebracht wird. Zwischen Abwickel- und Aufwickelspule ist ein Luftdämpfer angeordnet zur Bandzugsregelung und eine Klingeneinrichtung zum Entfernen von Schichtoberflächen-Vorsprüngen. Danach tritt der Drehkörper in Aktion zur Reinigung und Glättung der teilweise zerstörten Schichtoberfläche.

Mit der EP-A-709 832 ist eine weitere Oberflächenbearbeitungseinrichtung für einzelne Magnetbänder bekannt, bei der das Magnetband mittels Luftstroms an ein Läppband einer Läppeinrichtung angedrückt wird und von der Magnetschicht Vorsprünge und Ablagerungen entfernt werden. Dabei wird der Bandzug entweder vor oder hinter der Läppeinrichtung als Referenzwert für den jeweiligen Bandzug hinter bzw. vor der Läppeinrichtung gemessen und die Strömung der Luftstromeinrichtung so gesteuert, daß beide Bandzüge optimiert sind, so daß Dropouts bei der Magnetbandaufzeichnung/Wiedergabe eliminiert werden. Diese Steuerungs- und Regelvorgänge werden unabhängig von mechanischen Parametern des Magnetbands durchgeführt.

Die US-A-4 994 305 zeigt eine Vorrichtung nach dem Oberbegriff des Ansprunchs 1.

Die vorliegende Erfindung hat die Aufgabe, eine Vorrichtung für eine mehrstufige Bearbeitung von auf Endbreite geschnittenen Magnetbändern bereitzustellen, ohne die Magnetbänder trotz hoher Bearbeitungsleistung über Gebühr mechanisch zu beanspruchen.

Diese Aufgabe wird mit einer Vorrichtung zur Bearbeitung von auf Endbreite geschnittenen Magnetbändern mittels einer Gesamtanzahl hintereinander angeordneter Bearbeitungseinheiten und wenigstens einer Bandtransporteinrichtung erreicht durch wenigstens zwei im wesentlichen schlupflose Bandtransporteinrichtungen, die die Gesamt-Anzahl der Bearbeitungsstationen in Gruppen trennen, wobei jede Bandtransporteinrichtung etwas mehr als einen durchschnittlichen Bandzug von etwa 2 N pro Zoll Bandbreite aufbringt, den die in Bandtransportrichtung davorliegende Bearbeitungsgruppe benötigt und der Höchstwert des Bandzuges im elastischen Zugkraftbereich des Materials von mindestens etwa 20 % unter der maximal zulässigen Zugkraft des Magnetbandes liegt.

Dadurch wird eine mehrstufige Bearbeitung in einem Gerät unter Zugentlastung zwischen den einzelnen Arbeitsschritten durch hintereinandergeschaltete Bandtransportantriebe ermöglicht und auch der Vorteil der Hintereinanderschaltung beliebig vieler Bearbeitungseinheiten erreicht.

In praktischer Ausbildung sind die Bandtransporteinrichtungen als Vakuumwalzen mit Antriebsmotoren ausgebildet, wodurch ein Schlupf praktisch eliminiert wird.

In weiterer Ausgestaltung kann wenigstens eine Tänzerwalze jeder Bandtransporteinrichtung vorgeschaltet und ortsveränderlich gelagert sein, und eine Lagegebereinrichtung kann vorgesehen sein, die die Momentanlage der Tänzerwalze abtastet und ein lageabhängiges Signal zur Drehzahlsteuerung der Bandtransporteinrichtung erzeugt.

Dadurch wird in Verhältnissen, in denen die Dehnung der Magnetbänder nicht ausreicht, um den Gleichlauf aufeinanderfolgender Antriebe zu regeln, eine hervorragende Gleichlaufregelung erzielt, da die Tänzerwalzen kurzzeitige Geschwindigkeits- und Drehzahlunterschiede der Vakuumwalzen erlauben, ohne daß nennenswerte Bandzugsänderungen auftreten.

Vorteilhaft ist die erfindungsgemäße Vorrichtung zur Oberflächenbearbeitung der Magnetbänder einsetzbar.

Es ist jedoch auch zweckmäßig, eine oder mehrere Signal-Aufzeichnungs- und Wiedergabeeinrichtungen als Bearbeitungseinheit(en) in der erfindungsgemäßen Vorrichtung zu verwenden oder auch eine Kombination von Oberflächen- und Signalbearbeitungsseinheiten.

Es ist wirtschaftlich vorteilhaft, wenn die Bandtransporteinrichtungen das Magnetband mit einer Geschwindigkeit von etwa 10 m/s bis etwa 15 m/s transportieren.

Ein Ausführungsbeispiel der erfindungsgemäßen Vorrichtung ist im folgenden anhand einer Zeichnung beschrieben.

In der Zeichnung stellen dar

FIG. 1     eine Vorrichtung zur Oberflächenbearbeitung von Magnetbändern

FIG. 2     die Vorrichtung nach Figur 1 mit Bandzugsangaben

FIG. 3     eine Vorrichtung zur Signal-Aufzeichnung/Wiedergabe auf bzw. von Magnetbändern.

Auf einer mittels Elektromotors angetriebenen Abwickeleinheit 2 einer Bearbeitungsvorrichtung 1 befindet sich ein voller Bandrohwickel 2, der bearbeitet werden soll. Das Band B läuft von der Abwickelrolle 2 über eine Tänzerwalze 4A, die wie auch alle folgenden mit einer Lagegebereinrichtung (nicht dargestellt) ausgerüstet ist, und die mittels dieser Lagegebereinrichtung RegelSignale für die Bandzugsregelung erzeugt und an den Elektromotor der Abwickelrolle 2 abgibt.

Über Umlenkwalzen gelangt das Band B zur Bandschleif- oder Burnishstation 5, in der ein Schleifband einer Vorratsrolle 5A in Kontakt über die Schichtseite des Bandes B gefördert wird. In der anschließenden Reinigungsstation 6A, die aus Vorratsrolle und Aufwickelrolle eines Reinigungsbandes, z.B. eines Vliesmaterials, besteht, werden beim Schleifprozeß angefallener Schleifstaub oder Partikel wiederum durch eine Kontaktbandförderung des Reinigungsmediums entfernt. Die nächste Einheit ist eine Bandzugsmeßeinheit 7, mittels der der momentane Bandzug ähnlich einer Tänzerwalzen/Lagegebereinrichtung erfaßt aber über ein nicht dargestelltes Meßgerät angezeigt wird. ,

In Bandlaufrichtung folgt dann die erste Bandtransporteinrichtung 8, bestehend aus einer Vakuumwalze mit einem Elektromotor als Antrieb.

Diese erste Bandtransporteinrichtung 8 dient gleichzeitig als Hauptantrieb der Bearbeitungsvorrichtung 1, das heißt, sie ist für die noch folgenden Bandtransporteinrichtungen 13 und 14, die Sklaven, als "Master" maßgebend.

Die Vakuumwalzen der Bandtransporteinrichtungen 8, 13 und 14 funktionieren wie handelsübliche Vakuumwalzen, im beschriebenen Beispiel auf eine Halbzoll-Bandbreite (12,7 mm) angepaßt. Um ein feststehendes (nicht drehendes) Innenteil rotiert ein Zylindermantel mit Ausnehmungen oder Bohrungen. Wird nun über das Innenteil ein Vakuum aufgebracht, dann strömt durch die Ausnehmungen /Bohrungen des Zylindermantels Luft von außen nach innen, wobei nur die obere Hälfte des Umfangs des Zylindermantels freigegeben wird. Durch das darüberliegende Band B werden nun die Ausnehmungen/Bohrungen des Zylindermantels abgedeckt, wodurch das Band durch das Vakuum innen, mittels des Luftdrucks von außen fest auf den Umfang des Zylindermantels gepreßt wird, so daß der Bandtransport ohne Schlupf, also schlupflos, realisierbar ist.

Hinter der ersten Bandtransporteinrichtung wird das Band B über eine Polier- oder Finishstation 9 geführt, die z.B. aus einem sich drehenden Polierorgan mit einer gewindeähnlichen Struktur am Umfang bestehen kann, zum Verringern der Abrasivität und des Abriebs von Schichtbändern (DE-GM-29700458) bestehen kann, aber auch jede andere zum Polieren geeignete Ausbildung besitzen kann.

Danach kann wieder eine Reinigungsstation 6B - wie oben beschrieben - vorgesehen sein. Die nächste Station kann eine Klingen-Oberflächenbearbeitungs-Einheit 11 sein, in der mittels einer Saphirklinge herausstehende und/oder aufliegende Partikel von der Schichtseite des Bandes B abstreifbar sind. Die Saphirklinge selbst sollte dabei mittels einer Schwenkvorrichtung aus dem Bandkontakt-Bereich entfernbar sein, was z.B. immer bei Durchfahren einer Klebestelle erforderlich ist. Dadurch kann nicht nur die Saphirklinge geschont, sondern auch eine Verschmutzung derselben durch Kleber vermieden werden. Der Saphirklinge kann auch eine eigene, nicht dargestellte Reinigungsvorrichtung zugeordnet sein.

Zwischen der Klingeneinheit 11 und der zweiten Bandtransporteinrichtung 13 ist eine Tänzerwalze 12A vorgesehen, womit der Bandzug voreingestellt wird und gleichzeitig die Drehzahl des Antriebsmotors der Einrichtung 13 geregelt wird. Hinter der zweiten Bandtransporteinrichtung 13 gelangt das Band B über die Intensiv-Reinigungsstation 6C, die wie die Stationen 6A und 6B aufgebaut sein kann und in der ein spezielles Reinigungsvlies benutzt sein kann. In der noch folgenden Reinigungsstation 10 wird die Rückseite des Bandes B von eventuell vorhandenem oder eventuell bei der Bearbeitung anfallendem Schmutz oder von Partikeln gereinigt.

Die noch fehlenden Einheiten 12B, Tänzerwalze und die dritte Bandtransporteinrichtung 14 haben denselben Aufbau und dieselben Funktionen wie die oben beschriebene Tänzerwalze 12A und Bandtransporteinrichtung 13.

) Die schließlich noch folgende Tänzerwalze 4B entspricht der Tänzerwalze 4A nach der Abwickeleinheit 2, nur daß mit 4B die Drehzahl des Aufwickelmotors der Aufwickeleinheit 17 geregelt wird.

Mit dem Abtastgerät 15 ist ein Fehlersuchgerät für die Bandoberfläche vorgesehen, womit fehlerhafte Bänder entdeckbar und aussortierbar sind.

Mittels einer Wickelhilfe nach dem Kontaktwickel- oder Zentralwicklerprinzip (DE-OS 44 47 032 bzw. DE-OS 44 47 031 der Anmelderin) wird das fertig bearbeitete Band B auf einer Kernaufnahme aufgewickelt, die auf die Motorachse eines geregelten Elektromotors montiert ist.

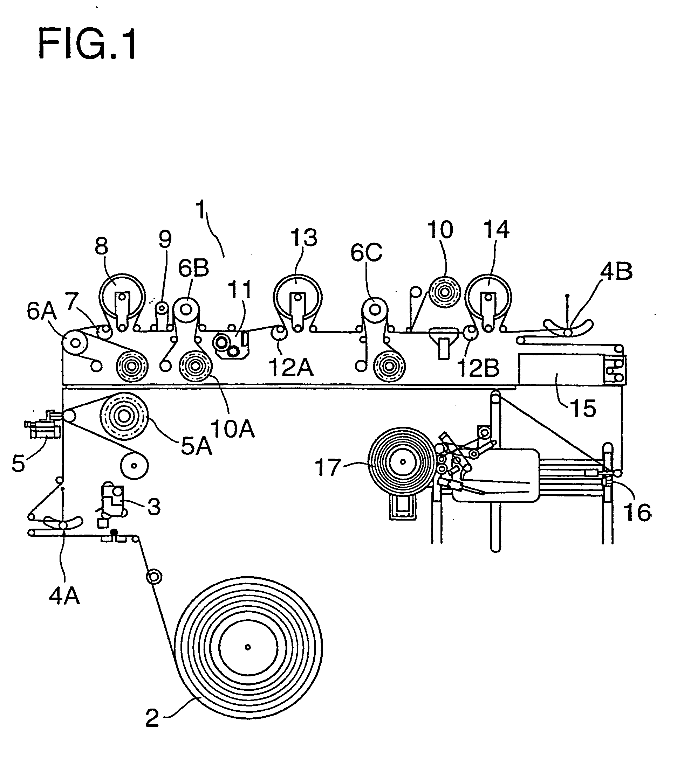

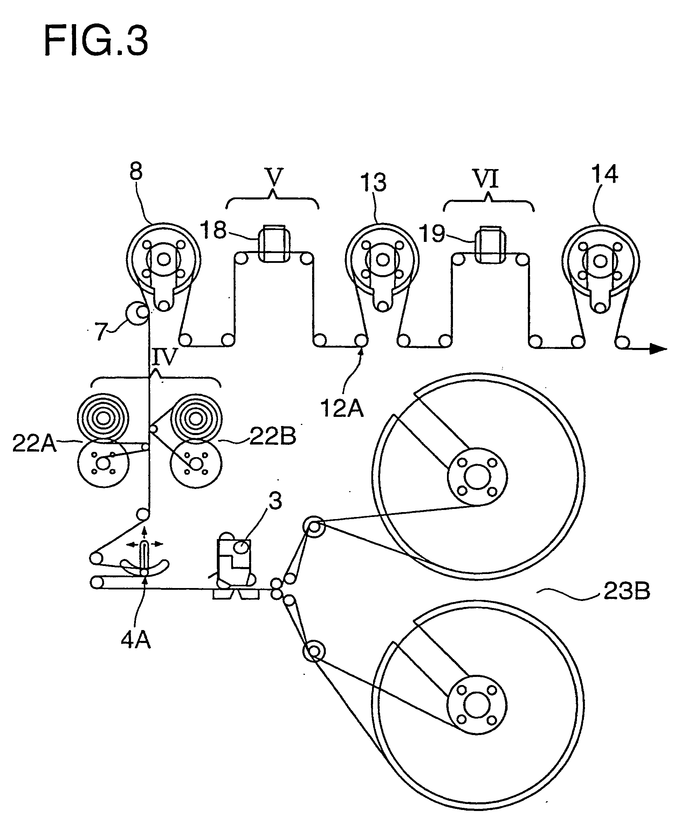

Figur 3 zeigt eine Variante 20 der Vorrichtung 1 aus Figur 1.

Darin ist der linke Teil der Vorrichtung 1 aus Figur 1 insofern abgewandelt als eine automatische Wickelwechseleinrichtung 21 vorgesehen ist. Außer einer Klebeeinrichtung 3 sind in Bandlaufrichtung die Tänzerwalze 4A und nachfolgend Reinigungseinrichtungen 22A und B - entsprechend den Reinigungseinrichtungen 6A-C in Figur 1 - für beide Bandseiten vorgesehen.

Selbstverständlich können diese Reinigungseinrichtungen 22A und B, wenn das Band B oberflächenbearbeitet werden soll, durch eine einseitige oder auch zweiseitige Schleif- und Reinigungseinrichtung wie z.B. 5A und 6 oder 22 ersetzt werden. Bei einseitiger Schleif- und Reinigungsbearbeitung, z.B. mittels 5A und 6A, ist auf der gegenüberliegenden Seite dennoch eine Reinigungseinrichtung 6 oder 22 notwendig, um eine gute Staub- und Partikelfreiheit des Bandes B zu gewährleisten.

Danach folgen die Bandzugsmeßeinheit 7 und eine erste, zweite und dritte Bandtransporteinrichtung 8, 13 und 14 aus Figur 1 mit einer Tänzerwalze 12A vor 13 und 12B vor 14. Zwischen den Einrichtungen 8 und 13 und 13 und 14 sind jeweils Schreib/Lesestationen 18 und 19 anstelle der mechanischen Oberflächenbearbeitungseinheiten 9, 6B und 11 sowie 6C und 10 vorgesehen. Es sind allerdings auch Kombinationen von elektrischen und mechanischen Oberflächenbearbeitungseinheiten denkbar.

Mittels der Einheiten 18 und 19 können beispielsweise Servospur-Signale (Servotrack) oder andere Steuerungssignale auf das Band B aufgeschrieben und nachfolgend gelesen, d.h. kontrolliert, werden. Es ist grundsätzlich auch möglich, eine reine Bandqualitätskontrolle (Verifying) durch Aufschreiben spezieller Signale und anschließendes Lesen und Löschen derselben vorzunehmen.

Der Bandzug muß in dieser Bearbeitungseinrichtung 20 sehr genau eingestellt und konstant gehalten werden, um für den Schreib- und Lesevorgang jeweils dieselben Verhältnisse zugrundezulegen.

Es wurde festgestellt, daß die Bearbeitungseinrichtungen 5, 5A und 6A; 9, 6B und 11; 6C und 10 (Fig. 1) bzw. 22A und 22B; 18; 9 (Fig. 3) vor und zwischen den Bandtransporteinrichtungen 8, 13 und 14 dem Transport des Bandes B einen Widerstand entgegensetzen, der durch Bandzug aufzubringen ist. Würde der notwendige Bandzug durch eine einzige Bandtransporteinrichtung aufgebracht, müßte er bei einem Halbzoll-Band (12,7 mm)bei etwa 2 N liegen. Bei den empfindlichen Magnetbändern kann dies aber je nach Banddicke bereits zu bleibenden Verformungsschäden an einem Halbzoll-Band führen.

Es wurde daher gefunden, daß mit wenigstens zwei, im wesentlichen schlupflosen Bandtransporteinrichtungen, wenn diese die Gesamt-Anzahl der Bearbeitungseinrichtungen in Gruppen teilen, die notwendigen Bandzüge erniedrigt werden können.

Als solche Gruppen kann man folgende erkennen

| Figur 1 | 5, 5A und 6A | (Gruppe I) |
|---------|--------------|------------|
|         | 9, 6B und 11 | (Gruppe II) |
|         | 6C und 10    | (Gruppe III) |
| Figur 3 | 22A und 22B  | (Gruppe IV) |
|         | 18           | (Gruppe V) |
|         | 19           | (Gruppe VI) |

Für die einzelnen Gruppen muß überraschenderweise im wesentlichen derselbe Bandzug von etwa $\Delta P + P$ aufgebracht werden, da der Bandzug der Größe P von den Bearbeitungseinrichtungen einer Gruppe "verbraucht" wird und ein Restbandzug $\Delta P$ auch hinter den Bandtransporteinrichtungen 8, 13 und 14 (sowie weiteren, wenn vorteilhaft), die den Bandzug durch Zugkraft aufbringen müssen, vorhanden sein soll.

Die Größe dieses Bandzugs $P + \Delta P$ richtet sich jedoch auch nach dem noch maximal zulässigen Zugkraftbereich des Bandmaterials und muß mit Sicherheit weit genug unter dem Maximum liegen, um eine bleibende Verformung des Bandes sicher auszuschließen.

Es ergibt sich für (jeweils pro Zoll Bandbreite (25,4 mm))

$$P \leqq 2 \text{ N}$$

und für

$$\Delta P \sim 0,1 - 0,4 \text{ N}.$$

(Der maximale Zugkraftbereich liegt für übliche 1/2-Zoll-Bänder für Audio/Video-Aufzeichnung etwa bei 0,2 - 1 N.)

Damit ist gewährleistet, daß der maximale Bandzug $P + \Delta P$ oder $P + 2\Delta P$ mindestens 20 % unter der maximal zulässigen Zugkraft üblicher Magnetbänder liegt und dennoch der maximale Bandzug aufgebracht wird, um mit hohen Bearbeitungs- und Transportgeschwindigkeiten von etwa 10 m/s bis etwa 15 m/s arbeiten zu können.

Die Vorrichtung ist damit auch energiemäßig günstig ausgelegt. Die die Vakuumwalzen der Bandtransporteinrichtungen 8, 13, 14 (und gegebenenfalls weiterer) antreibenden Elektromotoren können gemäß einer festen optimalen Drehzahlcharakteristik ausgewählt sein, da der über die Tänzerwalzen 12 in Anspruch genommene Drehzahl-Regelbereich relativ eng ist. Wie oben kurz erwähnt, wird zur Regelung die Momentan-Lage der Tänzerwalze 12 über den elektrischen Lagegeber abgefragt. Zieht die zugeordnete Bandtransporteinrichtung (8, 13, 14) zu schnell, bewegt sich die Tänzerwalze 12 nach oben, und die jeweilige Bandtransporteinrichtung bekommt über die Hochlage der Tänzerwalze 20 von der Lagegeber-Elektronik so lange ein Regelsignal "langsamer" zugeführt, bis die Tänzerwalze 12 wieder in ihre Sollage zurückgekehrt ist, und umgekehrt.

Die Abwickel- und Aufwickel-Zugkräfte betragen in Figur 1 beispielsweise $\Delta P$ und $2\Delta P$ und sind in dieser Auslegung den übrigen Bandzugskräften der Vorrichtung angepaßt.

Sowohl beim Schleifen als auch beim Reinigen des Bandes B werde Vlies oder Schleifband langsam entgegen der Bandlaufrichtung bewegt. Wenn ein Wickel voll ist und zu wechseln ist, können diese Einheiten zum Reinigen und Schleifen gestoppt werden.

Die Ausführung der Vorrichtung 20 in Figur 3 ist mit einer Wendewickel-Einheit 23 ausgestattet, die einen vollautomatischen Wikkelwechsel gestattet und für eine Signal-Aufzeichnungs-Wiedergabe (Bearbeitungs-) Vorrichtung und, z.B. auch für eine Audio- oder Video-Bespielanlage, neu und sehr vorteilhaft ist. Eine derartige Wendewickel-Einheit ist auch vorteilhaft auf der Aufwickelseite der Aufzeichnungs-/Wiedergabeanlagen. Selbstverständlich gilt das auch für Servospur-Aufzeichnungsanlagen!

Die Bandzugs-Verhältnisse müssen für die Schreib-(Aufzeichnungs-) sowie für die Lese-(Wiedergabe-)Operationen sehr genau eingestellt und aufeinander abgestimmt sein. Die Bandzüge P liegen in diesen Fällen im Bereich von etwa 1 N bis etwa 2 N für Halbzoll-Bänder.

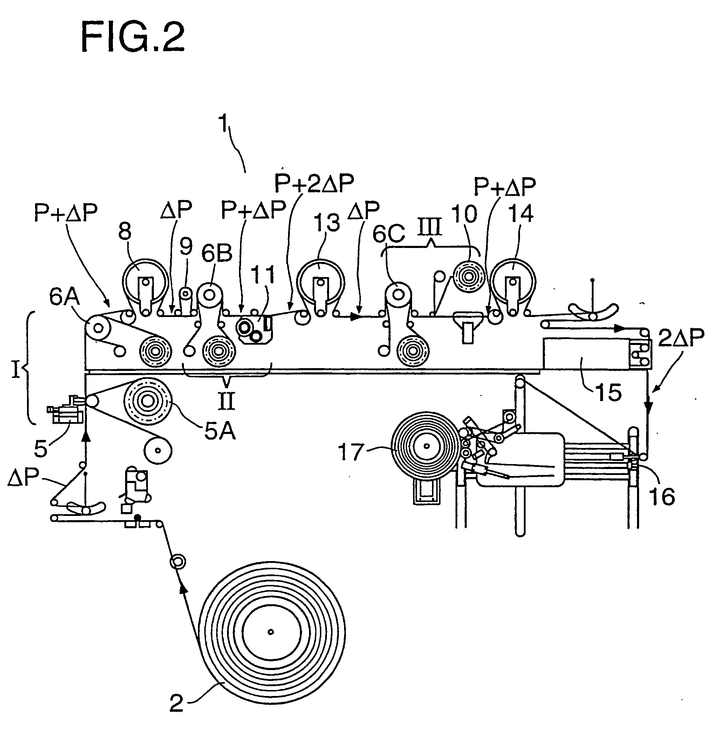

Die Forderung nach relativ hohen Bandzugswerten ist mit der erfindungsgemäßen Vorrichtung sehr gut erfüllbar, und es gelten im wesentlichen dieselben Grenzwerte und Größenordnungen wie bereits zu Figuren 1 und 2 beschrieben.

Die beschriebenen Vorrichtungen 1 und 20 sind für alle gängigen Bandbreiten üblicher Magnetbänder für Analog- und Digitalaufzeichnung einsetzbar.

Als besonderer Vorteil hat sich ergeben, daß eine mechanische Bearbeitung der hiermit erreichten Qualität bei einer ungeschnittenen breiten Magnetfolienbahn von ca. 20 Zoll Breite (500 mm) oder mehr nicht möglich war, da nicht alle Bereiche der Bandoberfläche gleichmäßig bearbeitet werden konnten.

Die Vorrichtung nach der vorliegenden Erfindung hat insbesondere die folgenden Vorteile:

- verschiedene Bearbeitungsschritte sind in einem einzigen Durchgang, genauer, in einem einzigen Ab- und Aufwickelvorgang durchführbar

- der für mehrere Bearbeitungsschritte notwendige, relativ hohe Bandzug kann ohne Bandschädigung und für hohe Bandtransportgeschwindigkeiten aufgebracht werden

- Veränderungen, Verengungen und Erweiterungen der Vorrichtung sind problemlos einfach möglich, da lediglich Bearbeitungseinheiten auszutauschen, zu entfernen oder hinzuzufügen sind durch Beibehaltung, Verringerung oder Erweiterung der Bandtransporteinrichtungen.

Die Erfindung betrifft eine mechanische und/oder signaltechnische Bearbeitungsvorrichtung für Bänder, insbesondere Magnetbänder, und enthält wenigstens zwei Bandtransporteinrichtungen, die einen durchschnittlichen Bandzug von 2 N pro Zoll (25,4 mm) Bandbreite aufbringen und damit unter etwa 20 % der Maximal-Zugkraft des Bandmaterials bleiben zur Vermeidung von bleibenden Materialverformungen. Die Bearbeitungsvorrichtungen können Glätt-, Schleif-, Polier- und Reinigungseinrichtungen sowie auch Signalaufzeichnungs-/Wiedergabe- und/oder Signal- oder Bandqualitäts-Kontrolleinrichtungen sein.

## Patentansprüche

1. Vorrichtung zur Bearbeitung von auf Endbreite geschnittenen Magnetbändern mittels einer Gesamtanzahl hintereinander angeordneter Bearbeitungseinheiten und wenigstens einer Bandtransporteinrichtung, mit wenigstens zwei im wesentlichen schlupflose Bandtransporteinrichtungen (8, 13, 14), die die Gesamt-Anzahl der Bearbeitungsstationen in Gruppen (I-III bzw. IV-VI) trennend, **dadurch gekennzeichnet daß** jede Bandtransporteinrichtung (8, 13, 14) etwas mehr als einen durchschnittlichen Bandzug von etwa 2 N pro 25,4 mm (Zoll). Bandbreite aufbringt, den die in Bandtransportrichtung davorliegende Bearbeitungsgruppe benötigt, und der Höchstwert des Bandzuges im elastischen Zugkraftbereich des Materials von mindestens etwa 20 % unter der maximal zulässigen Zugkraft des Magnetbandes liegt.

2. Vorrichtung nach Anspruch 1, **gekennzeichnet durch** Vakuumwalzen mit Antriebsmotoren als Bandtransporteinrichtungen (8, 13, 14).

3. Vorrichtung nach Anspruch 1 oder 2, **gekennzeichnet durch** wenigstens eine Tänzerwalze (12A, 12B), die jeder Bandtransporteinrichtung (13, 14) vorgeschaltet und ortsveränderlich gelagert ist und **durch** eine Lagegebereinrichtung, die die Momentanlage der Tänzerwalze (12A, 12B) abtastet und ein lageabhängiges Signal zur Drehzahlsteuerung der Bandtransporteinrichtung (13, 14) erzeugt.

4. Vorrichtung nach Anspruch 1 und einem oder beiden Ansprüchen 2 und 3, **gekennzeichnet durch** Bearbeitungseinheiten (5, 5A, 6A-6C, 9, 10, 11) zur Oberflächenbearbeitung der Magnetbänder (B).

5. Vorrichtung nach Anspruch 1 und einem oder mehreren der Ansprüche 2 bis 4, **gekennzeichnet durch** wenigstens eine Signal-Aufzeichnungs- und Wiedergabeeinrichtung (18, 19) als Bearbeitungseinheit, wobei der durchschnittliche Bandzug im Bereich von 2 N pro Zoll Bandbreite liegt.

6. Vorrichtung nach Anspruch 1 und einem oder mehreren der Ansprüche 2 bis 5, **dadurch gekennzeichnet, daß** die Bandtransporteinrichtungen (8, 13, 14) das Magnetband (B) mit einer Geschwindigkeit von etwa 10 m/s bis etwa 15 m/s transportieren.

7. Vorrichtung nach Anspruch 1 und 5, **dadurch gekennzeichnet, daß** dieselbe wenigstens eine Signal-Aufzeichnungs- und/oder - Wiedergabeeinrichtung (18, 19) aufweist und wenigstens eine Wendewickel-Einheit (23) vorgesehen ist.

## Claims

1. Apparatus for processing magnetic tapes cut to their final width by means of a total number of processing units arranged one behind the other and at least one tape transporting device, which apparatus comprises at least two substantially slipless tape transporting devices (8, 13, 14), which separate the total number of processing stations into groups (I-III and IV-VI), **characterized in that** each tape transporting device (8, 13, 14) applys somewhat more than an average tape tension of about 2 N per 25,4 mm (inch) of tape width, which the processing group lying ahead of it in the tape transporting direction requires, and the maximum value of the tape tension lying in the elastic tensile force range of the material of at least about 20% below the maximum permissible tensile force of the magnetic tape.

**2.** Apparatus as claimed in claim 1, which comprises vacuum rollers with drive motors as tape transporting devices (8, 13, 14).

**3.** Apparatus as claimed in claim 1 or 2, which comprises at least one compensating roller (12A, 12B), which is mounted ahead of each tape transporting device (13, 14) and can be changed in its location, and a position sensor device, which senses the momentary contact of the compensating roller (12A, 12B) and generates a position-dependent signal for the speed control of the tape transporting device (13, 14).

**4.** Apparatus as claimed in claim 1 and one or both of claims 2 and 3, which comprises processing units (5, 5A, 6A-6C, 9, 10, 11) for the surface finishing of the magnetic tapes (B).

**5.** Apparatus as claimed in claim 1 and one or more of claims 2 to 4, which comprises at least one signal recording and reproducing device (18, 19) as a processing unit, the average tape tension lying in the range of 2 N per inch of tape width.

**6.** Apparatus as claimed in claim 1 and one or more of claims 2 to 5, wherein the tape transporting devices (8, 13, 14) transport the magnetic tape (B) at a speed of about 10 m/s to about 15 m/s.

**7.** Apparatus as claimed in claims 1 and 5, wherein said apparatus has at least one signal recording and/or reproducing device (18, 19) and at least one reversible winding unit (23) is provided.

**Revendications**

**1.** Dispositif pour le traitement de bandes magnétiques coupées à la largeur finale au moyen d'un nombre total d'unités de traitement disposées les unes derrière les autres et d'au moins un ensemble de transport de bande, comprenant au moins deux ensembles de transport de bande (8, 13, 14) pour l'essentiel sans glissement, qui séparent le nombre total des stations-de travail en groupes (I-III ou IV-VI), **caractérisé en ce que** chaque ensemble de transport de bande (8, 13, 14) fournit un peu plus qu'une traction de bande moyenne d'environ 2 N par 25,4 mm (pouce) de largeur de bande, dont le groupe de traitement placé en amont dans le sens de transport de la bande a besoin, et que la valeur la plus haute de la traction de bande dans la zone de force de traction élastique du matériau est au moins environ 20% inférieure à la force de traction maximale admissible de la bande magnétique.

**2.** Dispositif selon la revendication 1, **caractérisé par** des rouleaux à vide avec des moteurs d'entraînement en tant qu'ensembles de transport de bande (8, 13, 14).

**3.** Dispositif selon la revendication 1 ou 2, **caractérisé par** au moins un rouleau tendeur (12A, 12B) qui est disposé en amont de chaque ensemble de transport de bande (13, 14) et logé de manière à pouvoir être changé de position, et par un ensemble détecteur de position, qui détecte la position actuelle du rouleau tendeur (12A, 12B) et génère un signal dépendant de la position pour commander la vitesse de rotation de l'ensemble de transport de bande (13, 14).

**4.** Dispositif selon la revendication 1 et l'une ou les deux des revendications 2 et 3, **caractérisé par** des unités de traitement (5, 5A, 6A-6C, 9, 10, 11) pour le traitement de surface des bandes magnétiques (B).

**5.** Dispositif selon la revendication 1 et l'une ou plusieurs des revendications 2 à 4, **caractérisé par** au moins un ensemble d'enregistrement et de restitution de signaux (18, 19) en tant qu'unité de traitement, la traction de bande moyenne se situant dans la plage de 2 N par pouce de largeur de bande.

**6.** Dispositif selon la revendication 1 et l'une ou plusieurs des revendications 2 à 5, **caractérisé en ce que** les ensembles de transport de bande (8, 13, 14) transportent la bande magnétique (B) à une vitesse de 10 m/s à 15 m/s environ.

**7.** Dispositif selon la revendication 5, **caractérisé en ce qu'**il présente au moins un ensemble d'enregistrement et/ou de restitution de signaux (18, 19) et **en ce qu'**au moins une unité d'inversion d'embobinage (23) est prévue.

# FIG.1

# FIG.2

# FIG.3